# EUROPÄISCHE PATENTSCHRIFT

(11) **EP 1 944 538 B1**
(45) Veröffentlichungstag und Bekanntmachung des Hinweises auf die Patenterteilung: **30.05.2018**
(21) Anmeldenummer: 07122710.2
(22) Anmeldetag: 10.12.2007
(51) Int. Cl.: F16L 55/05, F16L 55/04, F16L 55/027, F16L 55/02, F16L 55/053, F02M 55/04, F02M 65/00, F15B 1/02, F15B 21/00, G01F 15/16, F28D 1/02, G01F 1/72, F28D 1/047

(54) **Hydraulischer Impulsdämpfer**
Hydraulic impulse attenuator
Amortisseur d'impulsions hydraulique

(30) Priorität: 15.01.2007 DE 102007003124
(43) Veröffentlichungstag der Anmeldung: 16.07.2008
(73) Patentinhaber: ROBERT BOSCH GMBH, 70442 Stuttgart (DE)
(72) Erfinder: Thumer, Manfred, 70736, Stuttgart (DE); Goeser, Joachim, 73072, Donzdorf (DE); Ruethers, Gerhard, 73054, Eislingen (DE); Strack, Daniel, 73061, Ebersbach (DE)

(56) Entgegenhaltungen:
- EP-A1- 1 298 379
- CA-A1- 2 413 819
- DE-A1- 2 640 037
- DE-C1- 3 321 754

## Beschreibung

### Stand der Technik

Die Erfindung geht aus von einem hydraulischen Impulsdämpfer, der ein elastisches hydraulisches Volumen und eine Volumenstromdrossel umfasst. Durch das elastische hydraulische Volumen werden Druckschwankungen innerhalb eines größeren Volumens gepuffert und in Verbindung mit dem verringerten Durchfluss, der von der Volumenstromdrossel hervorgerufen wird, geglättet. Somit kann aus einem pulsierenden Volumenstrom ein gleichförmiger Volumenstrom erzeugt werden. Die DE3321754C1 offenbart ein Durchflussmessgerät, das einen Durchflussmesser und eine Zusatzvorrichtung besitzt. Hierzu gehört ein Speicherraum mit veränderlichem Volumen, der durch eine bewegbare Wand begrenzt ist, welche durch eine starre Platte und eine Rollmembran gebildet ist.

Bei der Prüfung von Injektoren für Verbrennungsmotoren, insbesondere Dieselmotoren, läuft Prüföl durch den Injektor. Der Volumenstrom besteht hierbei aus Einzelimpulsen, so dass sowohl Druck als auch Fließgeschwindigkeit zeitlich stark variieren und daher eine präzise Volumenmessung aufwändig ist. Um die Durchflussmenge mit einer gewissen Genauigkeit zu berechnen, sind schnelle Mengenmesseinrichtungen erforderlich, wobei dies zu hohen Kosten und einem hohen Wartungsaufwand führt.

Es ist daher eine Aufgabe der Erfindung, einen verbesserten hydraulischen Impulsdämpfer und eine verbesserte Volumenstrommesseinrichtung vorzusehen.

### Offenbarung der Erfindung

Der erfindungsgemäße hydraulische Impulsdämpfer nach Anspruch 1 ermöglicht eine hochflexible Abpufferung pulsierender Volumenströme, ohne dass ein großes Gasvolumen notwendig ist. Die Druckschwankungen werden erfindungsgemäß im Wesentlichen von Federelementen aufgenommen und geglättet, mit denen eine Membran belastet ist, die an das Puffervolumen stößt. Die Glättungswirkung einer elastischen Membran wird durch die Federelemente deutlich verbessert, so dass auch eine Membran mit einer relativ kleinen Oberfläche bzw. ein kleines Puffervolumen verwendet werden kann.

Während die eine Seite der Membran, die Membraninnenfläche, zum Puffervolumen hin gewandt ist und dieses teilweise abschließt, dient die andere Oberfläche der Membran, die Membranaußenfläche, zur teilweisen Abgrenzung eines Druckausgleichvolumens, das direkt oder über eine Drossel mit der Umgebung verbunden werden kann. Dieses Druckausgleichvolumen kann auch sehr klein gehalten werden, so dass die Schwingungen der Membran und der Federelemente mittels einer Drossel gedämpft werden können, die an das Druckausgleichvolumen angeschlossen ist. Die Drossel kann auch an ein Ölreservoir angeschlossen sein, um einen Gegendruck zu dem Arbeitsdruck zu erzeugen, der in dem Puffervolumen herrscht, um den zwischen der Membraninnenfläche und der Membranaußenfläche herrschenden Druckunterschied zumindest teilweise zu kompensieren. Vorzugsweise ist die Membran auf der Membranaußenfläche mit einer Platte gleichmäßig belastet, die mit einer Federkraft beaufschlagt ist. Hierzu werden Federelemente verwendet, die an gleichmäßig zueinander beabstandeten Angriffspunkten ihre Federkraft in die Platte einleiten. Im Allgemeinen kann eine Platte durch gleichmäßig verteilte Federelemente entweder von der Membranaußenfläche zu dem Puffervolumen hingedrückt werden, oder die Membraninnenfläche wird mit einer Zugkraft beaufschlagt, die die Membran zum Puffervolumen hin ziehen. Die Federelemente können zusammen mit der Membran und der in dem Volumen vorhandenen Flüssigkeit ein schwingendes System aufbauen. Um diese Schwingungen zu dämpfen, kann eine Drossel verwendet werden, die über ein Druckausgleichvolumen die Schwingungen der Membran dämpfen. Ferner können zur Dämpfung zusätzlich oder alternativ Turbulenzen in dem Puffervolumen und/oder Druckausgleichvolumen Turbulenzen durch Flächen oder Kanten erzeugt werden, um die von der in dem Volumen vorhandene Flüssigkeit umströmt wird, wenn Strömungen aufgrund der Bewegung der Membran auftreten.

An das Puffervolumen wird vorzugsweise eine Halterungsvorrichtung angeschlossen, die zum Halten von Einspritzkomponenten verwendet wird. Diese Einspritzkomponenten werden hinsichtlich ihrer Abgabemenge getestet, indem Öl durch diese hindurchgeführt wird und indem das Öffnen und Schließen der Einspritzkomponenten mittels Steuersignale veranlasst wird. Im Falle von Injektoren tritt im normalen Betrieb Öl stoßweise in das Puffervolumen hinein, wobei der erfindungsgemäße Impulsdämpfer die stoßweisen Volumenänderungen abfedert. Das durch die Injektoren in das Puffervolumen ein strömende Öl tritt an anderer Stelle aus dem Puffervolumen wieder aus, wobei die Volumenänderungen durch den hydraulischen Impulsdämpfer, insbesondere durch die Membran, gedämpft sind. Das in das Puffervolumen eingetretene Prüföl wird durch eine Drossel durchgeleitet, bevor der Prüfölstrom einem Durchflussmesser zugeführt wird. Durch die Drosselwirkung wird die pulsierende Strömung des Prüföls weiter geglättet, bzw. in Zusammenwirkung mit dem Membran und dem Puffervolumen, so dass der angeschlossene Durchflussmesser einen nahezu kontinuierlichen Volumenfluss messen kann. Daher ist es möglich, einen wenig komplexen, preiswerten Zahnradmesser zu verwenden, der bei nicht pulsierenden Volumenströmen präzise Messergebnisse liefert. Durch die Glättung des Wechselanteils des Volumenflusses können somit deutlich einfachere Durchflussmesser oder Mengenmesser verwendet werden, wobei gleichzeitig die Messgenauigkeit auch unter Verwendung von einfachen Messgeräten erhöht werden kann.

Durch die Verwendung eines federgestützten Membrans kann der hydraulische Impulsdämpfer in einer kleinen Baugröße ausgeführt werden. Ferner lassen sich die Dämpfeigenschaften des hydraulischen Impulsdämpfers durch Änderungen der Federkräfte und / oder durch Änderung der Drossel einstellen, die das Druckausgleichvolumen mit der Umgebung verbindet.

In einer weiteren Ausführung der Erfindung wird die Drossel, welche das Puffervolumen mit dem Volumenmesser verbindet, von einer lang gestreckten Leitung gebildet, die beispielsweise in Form von einer Vielzahl von mäanderförmigen Schleifen kompakt aufgebaut ist. Gemäß einer Ausführung hat die Leitung einen geringen Wärmewiderstand zur Umgebung, beispielsweise aufgrund einer geringen Wanddicke, großen Oberfläche und/oder einem hohen Wärmeleitungskoeffizienten. Die schlaufenförmige Leitung kann dünnwandig und aus Metall sein, so dass die Temperatur der durch die Leitung fließenden Flüssigkeit genau gemessen und gesteuert werden kann. Die Leitung kann zumindest teilweise in einem Liquidbehälter vorgesehen sein.

Aufgrund der Temperaturabhängigkeit des Prüfaufbaus waren in Systemen gemäß dem Stand der Technik aufwändige Temperatursteuerungen für das Prüföl notwendig. Die erfindungsgemäße Drossel, welche ebenfalls zur Dämpfung beiträgt, hat die weitere Funktion der Temperatursteuerung. Insbesondere bei Ausführungen als lange dünnwandige Leitung kann die Temperatur des Prüföls sehr einfach unter Normaldruck geregelt werden, indem die Leitungsschleifen der Drossel in einem temperaturstabilisierten Prüföltank vorgesehen werden. Die Drosselwirkung bestimmt sich hauptsächlich durch die Gesamtlänge des Rohrs und dem Querschnitt, der vorzugsweise klein vorgesehen ist, um eine hohe Dämpfdrosselwirkung zu erreichen. Weitere beeinflussende Faktoren sind die Viskosität und damit die Temperatur des Prüföls sowie die Geometrie der Schleifen. Vorzugsweise sind die einzelnen Schlaufen der Leitung, die die Drossel bilden, regelmäßig übereinander angeordnet, so dass sich eine Konvektionsströmung in dem Prüföltank ergeben kann. Die Leitung, welche die Drossel bildet, ist somit wie die Kühlschlange eines Kühlgeräts ausgebildet.

Die aus dem Puffervolumen herausführende Leitung führt zunächst durch die als Leitung vorgesehene Drossel und dann durch ein Volumenmessgerät, an dessen Ausgang wiederum vorzugsweise ein Auffangbehälter angeschlossen ist. In gleicher Weise ist an den Ausgang des Druckausgleichvolumens eine Drossel angeschlossen, deren Ausgang ebenfalls in einem Auffangbehälter endet. Der Auffangbehälter des Ausgleichvolumens ist vorzugsweise mit einem Druck beaufschlagt, um den in dem Puffervolumen bestehenden Druck zumindest teilweise auszugleichen. Alternativ kann das Druckausgleichvolumen direkt oder über die Drossel mit der Umgebung verbunden sein. Das Druckausgleichvolumen kann mit Gas, beispielsweise Umgebungsluft, oder mit Prüföl gefüllt sein.

### Kurze Beschreibung der Zeichnungen

Ausführungsbeispiele der Erfindung sind in den Zeichnungen dargestellt und in der nachfolgenden Beschreibung näher erläutert.

Es zeigen
- Figur 1: eine Realisierungsvariante des erfindungsgemäßen Impulsdämpfers;
- Figur 2: eine Realisierungsvariante der Volumenstromdrossel und
- Figur 3: ein Prinzipschaltbild des hydraulischen Impulsdämpfers, der an ein Durchflussmessgerät angeschlossen ist.

### Ausführungsformen

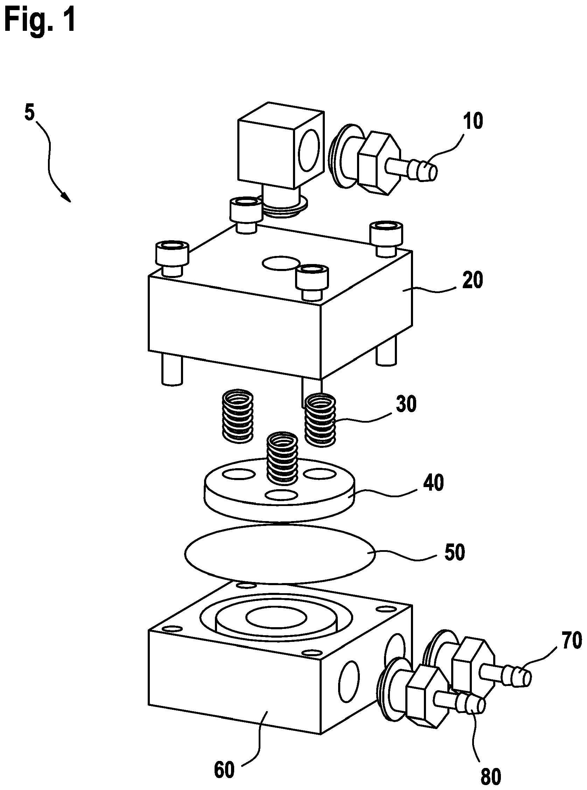

In der Figur 1 ist eine Realisierungsvariante des erfindungsgemäßen hydraulischen Impulsdämpfers in Explosionsansicht dargestellt. Der hydraulische Impulsdämpfer umfasst einen Druckausgleichanschluss 10, einen Deckel 20, Druckfedern 30, eine Druckplatte 40, eine elastische Membran 50, eine Bodenplatte 60, einen Messanschluss 70 und einen Volumenstromdrossel-Anschluss 80. In der Bodenplatte 60 ist ein Puffervolumen 210 vorgesehen, welches an einer Seite von einer ebenen Membran abgeschlossen ist. Die Membran weist eine Membraninnenfläche auf, die dichtend mit einer Oberseite der Bodenplatte abschließt. Der Messanschluss 70 und der Volumenstromdrossel-Anschluss 80 sind in Fluidkommunikation mit dem Puffervolumen 210 und mit diesen über Kanäle in der Bodenplatte verbunden.

Das Puffervolumen 210 ist als Zylinder ausgestaltet, dessen untere Bodenfläche und Seitenwand von der Bodenplatte gebildet wird, und dessen obere Kopfseite von der Membran 50 abgeschlossen wird. Da das Puffervolumen 210 während des Betriebs unter Druck steht, ist eine Druckplatte 40 vorgesehen, die über Federelemente 30 die Membran auf das Puffervolumen 210 und auf die Bodenplatte drückt. Die Membran 50 und die Druckplatte 40 sind kreisförmig ausgebildet. In der Druckplatte 40 sind drei Vertiefungen vorgesehen, in die jeweils ein Federelement eingreift. Die Federelemente sind Druckfedern, die vorzugsweise die gleiche Baugröße und die gleiche Steifigkeit aufweisen. Ein auf die Bodenplatte 60 aufgesetzter Deckel 20 weist entsprechende Aufnahmen auf, deren Boden das Gegenlager für die Druckfederelemente vorsieht. Die Druckfederelemente sind somit im zusammengebauten Zustand des hydraulischen Impulsdämpfers 5 zwischen Deckel 20 und der Druckplatte 40 eingeklemmt und bewirken, dass die Druckplatte gegen die Membran 50 und auf die Bodenplatte 60 gedrückt wird.

Der in Figur 1 dargestellte Impulsdämpfer weist einen quadratischen Deckel 20 auf, wobei in jeder der vier Ecken des Deckels Öffnungen vorgesehen sind, die sich senkrecht zur Deckelebene erstrecken. In zusammengebauten Zustand ragen Schrauben durch die Öffnungen im Deckel hindurch und greifen in Gewindeöffnungen der Bodenplatte 60 hinein, die an entsprechenden gegenüberliegenden Stellen dort vorgesehen sind. In dem Deckel 20 ist ferner ein Druckausgleichvolumen bzw. ein direkter Kanal senkrecht zur Deckelebene ausgebildet, der die Membranaußenfläche über die Druckplatte 40 mit einer Oberseite des Deckels verbindet. In dem in Figur 1 dargestellten hydraulischen Impulsdämpfer 5 ist ein Kanal vorgesehen, in den ein Winkelstück abgedichtet in den Deckel befestigt ist, beispielsweise mittels einer Schraubverbindung, wobei das Winkelstück wiederum abgedichtet mit einem Druckausgleichanschluss 10 verbunden ist.

Ferner ist in der Bodenplatte das Puffervolumen seitlich über Kanäle mit einem Messanschluss 70 und einem Volumenstromdrossel-Anschluss 80 verbunden, die jeweils als einzelne Komponenten ausgebildet sind und über Dichtungen mit den Kanälen der Bodenplatte verbunden sind. An den Messanschluss 70 wird vorzugsweise eine Messleitung angeschlossen, die zu einer zu überprüfenden Einspritzkomponente führt, die mittels einer externen Druckquelle mit unter Druck stehendem Prüföl beaufschlagt wird. Die Einspritzkomponente steuert somit pulsierend den Prüfölfluss, der in den Anschluss 70 hineinführt.

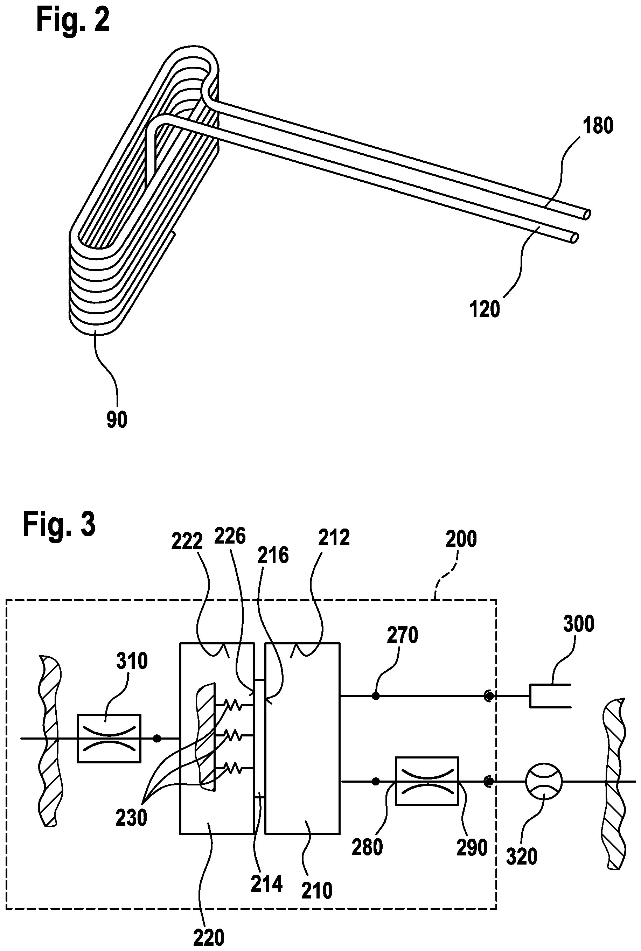

An den Volumenstromdrossel-Anschluss 80 wird ein Ende der schlaufenförmig als dünnes Rohr ausgebildeten Volumenstromdrossel 90, 290 angeschlossen, während das andere Ende der Volumenstromdrossel 90, 290 an einen Durchflussmesser, beispielsweise an einen Zahnradmesser, angeschlossen ist. Die Volumenstromdrossel 90 ist in Figur 2 näher dargestellt. Vorzugsweise regelt die Drossel bei einem Druckunterschied von 0 - 1 bar den Volumenstrom auf 0 - 1 Liter / Minute. Die als langes dünnwandiges Rohr ausgelegte Volumenstromdrossel 90 ist in einem Prüföltank untergebracht, dessen Temperatur stabilisiert ist, beispielsweise passiv über Kühlkörper oder aktiv mittels einer Temperatursteuerung, einem Heizelement und / oder einem aktiven Kühlelement.

Die Figur 2 zeigt eine Ausführung der Volumenstromdrossel 90, die in dem erfindungsgemäßen hydraulischen Impulsdämpfer 5 eingesetzt wird. Die Volumenstromdrossel 90 ist in regelmäßigen aufeinander liegenden Schlaufen ausgebildet. Jede Schlaufe weist zwei halbkreisförmige Krümmungen auf, die sich gegenüberliegen und die über gerade Strecken verbunden sind. Als Leitung wird vorzugsweise ein metallisches Rohr mit dünner Wand verwendet, vorzugsweise mit einer Blechdicke gleich oder kleiner als 0,2 mm. In einer Ausführung der Erfindung ist die Volumenstromdrossel 90 aus Messing oder Stahl ausgebildet. Es können jedoch auch andere Materialien verwendet werden, die einen ausreichenden Wärmeaustausch zwischen der Flüssigkeit außerhalb der Drossel und der Flüssigkeit innerhalb der Drossel ermöglichen.

Die Schlaufen können alternativ auch vollständig kreisförmig sein oder die Form eines Ovals ausbilden. Ferner weist die Volumenstromdrossel 90 Zuführungen 180, 120 auf, wobei die Zuführung 180 für den Anschluss an das hydraulische Volumen vorgesehen ist, welches sich in der Bodenplatte des hydraulischen Impulsdämpfers befindet. Die mit dem Bezugszeichen 120 bezeichnete Zuführung dient dem Anschluss an ein Durchflussmessgerät, so dass während des Betriebs Prüföl über den Anschluss 180 eingebracht wird und über den Anschluss 120 aus der Volumenstromdrossel 90 austritt, um einem Durchflussmessgerät zugeführt zu werden. Hierbei ist zu bemerken, dass die Wechselkomponente des Öldrucks am Anschluss 120 deutlich geringer ist, als die Wechselkomponente am Anschluss 180. Der Anschluss 180 kann als Eingang betrachtet werden, während der Anschluss 120 als Ausgang dient, wobei diese Zuordnung auch umgekehrt sein kann. Die Volumenstromdrossel 90 ist in einem temperaturstabilisierten Prüföltank untergebracht (nicht dargestellt), wobei der Prüföltank in diesem Fall Öffnungen unterhalb des Prüfölspiegels aufweist, durch den die Zuführungen 120 und 180 abgedichtet geführt werden. Durch die Anordnung der Volumenstromdrossel 90 in dem Prüföltank wird gewährleistet, dass das durch die zu überprüfende Einspritzkomponente geführte Prüföl die gleiche Temperatur aufweist wie das in dem hydraulischen Impulsdämpfer, in der Volumenstromdrossel 90 sowie in dem Durchflussmesser vorgesehene Öl. Somit werden Temperatureffekte kompensiert. Alternativ kann die Volumenstromdrossel 90 auch als Kühlschlange ausgebildet und in einem Behälter angeordnet sein, der mit einer anderen temperaturstabilisierten Flüssigkeit gefüllt ist. Da die Viskosität des Öls stark von der Temperatur abhängt, ist die Drosselwirkung temperaturabhängig. Zur exakten Volumenmessung ist daher eine Temperatursteuerung erforderlich.

Vorzugsweise weist der erfindungsgemäße hydraulische Impulsdämpfer die in Figur 2 dargestellte Volumenstromdrossel 90 auf, und hat eine Wirksamkeit im Bereich von 0 - 1 bar bei einem Volumenstrom von 0 - 1 Liter / Minute.

Die Figur 3 zeigt eine Ausführung des erfindungsgemäßen hydraulischen Impulsdämpfers als Gesamtschaubild. Der hydraulische Impulsdämpfer 200 umfasst ein Puffervolumen 210 mit einem Messanschluss 270, der als Volumeneingang dient. Ein Volumenstromdrossel-Anschluss 280, der als Volumenausgang dient, führt aus dem Puffervolumen 210 heraus. Ein Teil einer Wand des Puffervolumens ist durch eine Membraninnenfläche 216, einer Membran 214 gebildet. Erfindungsgemäß ist die Membran durch Federelemente 230 belastet. Die Federelemente beaufschlagen die Membranaußenfläche 226, die der Membraninnenfläche 216 gegenüber liegt, mit einer Kraft, die beispielsweise über eine Druckplatte gleichmäßig auf zumindest einen Teil der Membranaußenfläche übertragen wird. Die Membraninnenfläche und die Membranaußenfläche sind die sich gegenüberliegenden Außenseiten derselben Membran.

Der hydraulische Impulsdämpfer umfasst ferner ein Druckausgleichvolumen 220, das von einer zweiten Begrenzungsoberfläche 222 begrenzt wird, wobei ein Teil der zweiten Begrenzungsoberfläche 220 durch die Membranaußenfläche 226 der Membran 214 gebildet wird. Mit anderen Worten trennt die Membran 214 das Puffervolumen 210 von dem Druckausgleichvolumen 220, wobei die beiden Volumina durch eine gemeinsame Wand getrennt sein können, in der die Membran angebracht ist. Die zum Puffervolumen 210 hin gerichtete Oberfläche der Membran wird Membraninnenfläche 216 genannt und die zum Druckausgleichvolumen 220 hin gerichtete Oberfläche wird als Membranaußenfläche 226 bezeichnet. Das Druckausgleichvolumen 220 umfasst einen Druckausgleichanschluss, der als Druckausgleich des Drucks in dem Puffervolumen 210 vorgesehen ist. In der in Figur 3 dargestellten Ausführung ist das Druckausgleichvolumen 220 über eine Drossel 310 zum gesteuerten Druckausgleich mit der Umgebung verbunden. Alternativ kann das Druckausgleichvolumen direkt oder über eine Drossel 310 mit einer gesteuerten Druckquelle verbunden sein.

Der Volumenstromdrossel-Anschluss 280 ist mit dem Eingang einer Volumenstromdrossel 290 verbunden, und der Ausgang der Volumenstromdrossel 290 ist mit dem Eingang eines Volumenstrommessgeräts 320 verbunden. Der Volumenstrommesser 320 arbeitet als Durchflussmesser, um die Mengenabgabe, die am Messanschluss 270 stattfindet, zu messen. Bei einer nicht-kontinuierlichen, pulsierenden oder stoßweisen Mengenabgabe an den Messanschluss 270 wird über den hydraulischen Impulsdämpfer 200 gedämpft und geglättet, d.h. von Wechselanteilen bereinigt, so dass am Ausgang der Volumenstromdrossel 290, an welches der Durchflussmesser 320 angeschlossen ist, ein kontinuierlicher Volumenstrom auftritt.

Am Messanschluss 270 kann eine Halterung 300 angebracht sein, die den Ausgang eines Injektors aufnehmen kann. Der Eingang des Injektors wird vorzugsweise mit einer unter Druck stehenden Prüföldruckquelle beauftragt und angesteuert, entsprechende Mengen an Drucköl gemäß eines Steuersignals abzugeben.

Das Druckausgleichvolumen 220 kann ebenfalls mit Prüföl gefüllt sein und in Fluidkommunikation, direkt oder über eine Drossel, mit dem Inhalt des Prüfölbehälters stehen.

Gemäß einer Ausführung der Erfindung umfasst die Volumenstromdrossel 90, 290 ein langes Metallrohr mit dünnen Wänden, das in mehreren Schlingen zusammengelegt ist, beispielsweise wie es in Figur 2 dargestellt ist. Diese Volumenstromdrossel 90 ist vorzugsweise in einem Behälter vorgesehen, in dem das Prüföl vorgesehen ist, welches über den Injektor in die Halterung 300 und somit in den hydraulischen Impulsdämpfer 200 eingebracht wird.

Gemäß einer Ausführung der Erfindung ist der Prüföltank temperaturgesteuert, wobei der Wärmeübergang zwischen dem in der Volumenstromdrossel 90 befindlichen Öl und dem umgebenden Prüföl des Prüfölbehälters die Temperatur des Prüföls an jedem Ort der Vorrichtung genau definiert. Vorzugsweise wird der Ausgang des Durchflussmessers 320 in den Prüfölbehälter zurückgeführt, um einen geschlossenen Kreislauf für die Messeinrichtung vorzusehen, in der der erfindungsgemäße hydraulische Impulsdämpfer 200 eingesetzt ist.

Mit dem hydraulischen Impulsdämpfer kann eine Volumenstrommesseinrichtung vorgesehen werden, die sich für den gepulsten Volumenstrom eines Dieselinjektors eignet. Anstatt eines Dieselinjektors können auch andere Einspritzkomponenten an den Messanschluss angeschlossen werden und mit einer entsprechend unter Druck stehenden Prüfölquelle beaufschlagt werden, beispielsweise Düsenhalterkombinationen oder Ähnliches. Der hydraulische Impulsdämpfer sowie die Volumenstrommesseinrichtung, die den hydraulischen Impulsdämpfer umfasst, werden vorzugsweise in der Testvorrichtung zur Überprüfung von Einspritzkomponenten sowie in dem Verfahren zum Überprüfen von Einspritzkomponenten verwendet, die den Gegenstand der Patentanmeldung (internes Zeichen: 06/3268; R.317685) mit dem Titel "Testvorrichtung und -verfahren zur Überprüfung von Einspritzkomponenten" betreffen, die ebenfalls auf die Anmelderin der vorliegenden Erfindung zurückgeht.

## Patentansprüche

1. Hydraulischer Impulsdämpfer (5) mit einem elastischen hydraulischen Puffervolumen (210) und einer Volumenstromdrossel (90, 290), die mit dem Puffervolumen (210) in Fluidkommunikation steht, wobei eine erste Begrenzungsoberfläche (212) das Puffervolumen (210) umschließt, wobei die erste Begrenzungsoberfläche (212) eine federbelastete Membraninnenfläche (216) einer Membran (50, 214) umfasst, **dadurch gekennzeichnet, dass** der hydraulische Impulsdämpfer (5) einen temperaturstabilisierenden Prüföltank aufweist, wobei die Volumenstromdrossel (90, 290) durch eine langgestreckte schlaufenförmige Leitung gebildet wird und in dem Prüföltank angeordnet ist.

2. Hydraulischer Impulsdämpfer (5) nach Anspruch 1, wobei die federbelastete Membraninnenfläche (216) über einen elastischen Abschnitt abdichtend mit einer starren Membranhalterung (60) verbunden ist.

3. Hydraulischer Impulsdämpfer nach Anspruch 1, wobei die Membran (214) eine einteilige elastische Membran (214) ist, die die Membraninnenfläche (216) und den clastischen Abschnitt umfasst.

4. Hydraulischer Impulsdämpfer (5) nach Anspruch 1, der ferner ein Druckausgleichvolumen (220) und eine zweite Begrenzungsoberfläche (222) umfasst, wobei die zweite Begrenzungsoberfläche (222) das Druckausgleichvolumen (220) umschließt und die Membran (214) eine Membranaussenfläche (226) aufweist und die zweite Begrenzungsoberfläche (222) die Membranaussenfläche (226) umfasst.

5. Hydraulischer Impulsdämpfer (5) nach Anspruch 4, wobei das Druckausgleichvolumen (220) über eine Drossel (310) mit der Umgebung in Verbindung steht.

6. Hydraulischer Impulsdämpfer nach einem der vorherigen Ansprüche , wobei die Leitung durch ein dünnwandiges Rohr ausgebildet ist.

7. Hydraulischer Impulsdämpfer nach einem der vorherigen Ansprüche , wobei die Leitung durch ein sich mäanderförmig erstreckendes Rohr (90) ausgebildet ist, das sich mehrmals durch ein Kühlvolumen hindurch erstreckt, wobei das Rohr eine wärmeleitende Wand aufweist.

8. Volumenstrommesseinrichtung (200) mit einem hydraulischen Impulsdämpfer (5) nach einem der vorangehenden Ansprüche, die ferner einen Durchflussmesser (320) umfasst, der in Fluidverbindung mit dem Impulsdämpfer (5) ist.

## Claims

1. Hydraulic pulse damper (5) having an elastic hydraulic buffer volume (210) and having a volume flow throttle (90, 290) which is in fluidic communication with the buffer volume (210), wherein a first delimiting surface (212) encloses the buffer volume (210), wherein the first delimiting surface (212) comprises a spring-loaded inner diaphragm surface (216) of a diaphragm (50, 214), **characterized in that** the hydraulic pulse damper (5) has a temperature-stabilizing test oil tank, wherein the volume flow throttle (90, 290) is formed by an elongate, loop-shaped line and is arranged in the test oil tank.

2. Hydraulic pulse damper (5) according to Claim 1, wherein the spring-loaded inner diaphragm surface (216) is connected in a sealing manner to a rigid diaphragm holder (60) via an elastic section.

3. Hydraulic pulse damper according to Claim 1, wherein the diaphragm (214) is a one-piece elastic diaphragm (214) which comprises the inner diaphragm surface (216) and the elastic section.

4. Hydraulic pulse damper (5) according to Claim 1, which furthermore comprises a pressure compensation volume (220) and a second delimiting surface (222), wherein the second delimiting surface (222) encloses the pressure compensation volume (220), and the diaphragm (214) has an outer diaphragm surface (226), and the second delimiting surface (222) comprises the outer diaphragm surface (226).

5. Hydraulic pulse damper (5) according to Claim 4, wherein the pressure compensation volume (220) is connected to the surroundings via a throttle (310) .

6. Hydraulic pulse damper according to one of the preceding claims, wherein the line is formed by a thin-walled tube.

7. Hydraulic pulse damper according to one of the preceding claims, wherein the line is formed by a tube (90) which extends in a meandering manner and which extends through a cooling volume multiple times, wherein the tube has a heat-conducting wall.

8. Volume flow measurement device (200) having a hydraulic pulse damper (5) according to one of the preceding claims, which furthermore comprises a throughflow meter (320) which is fluidically connected to the pulse damper (5).

## Revendications

1. Amortisseur d'impulsions hydraulique (5), comprenant un volume tampon hydraulique élastique (210) et un étranglement de débit volumique (90, 290), qui est en communication fluidique avec le volume tampon (210), une première surface limite (212) entourant le volume tampon (210), la première surface limite (212) comprenant une surface intérieure de membrane sollicitée par ressort (216) d'une membrane (50, 214), **caractérisé en ce que** l'amortisseur d'impulsions hydraulique (5) présente un réservoir d'huile de contrôle stabilisé en température, l'étranglement de débit volumique (90, 290) étant formé par une conduite allongée en forme de tuyau souple et étant disposé dans le réservoir d'huile de contrôle.

2. Amortisseur d'impulsions hydraulique (5) selon la revendication 1, dans lequel la membrane sollicitée par ressort (216) est connectée de manière hermétique par le biais d'une portion élastique à une fixation de membrane rigide (60).

3. Amortisseur d'impulsions hydraulique selon la revendication 1, dans lequel la membrane (214) est une membrane élastique d'une seule pièce (214) qui entoure la surface intérieure de membrane (216) et la portion élastique.

4. Amortisseur d'impulsions hydraulique (5) selon la revendication 1, qui comprend en outre un volume d'équilibrage de la pression (220) et une deuxième surface limite (222), la deuxième surface limite (222) entourant le volume d'équilibrage de la pression (220) et la membrane (214) présentant une surface extérieure de membrane (226) et la deuxième surface limite (222) comprenant la surface extérieure de membrane (226).

5. Amortisseur d'impulsions hydraulique (5) selon la revendication 4, dans lequel le volume d'équilibrage de la pression (220) est en liaison avec l'environnement par le biais d'un étranglement (310).

6. Amortisseur d'impulsions hydraulique selon l'une quelconque des revendications précédentes, dans lequel la conduite est réalisée par un tube à parois minces.

7. Amortisseur d'impulsions hydraulique selon l'une quelconque des revendications précédentes, dans lequel la conduite est réalisée par un tube (90) s'étendant en forme de méandres, qui s'étend plusieurs fois à travers un volume de refroidissement, le tube présentant une paroi thermoconductrice.

8. Dispositif de mesure de débit volumique (200) comprenant un amortisseur d'impulsions hydraulique (5) selon l'une quelconque des revendications précédentes, qui comprend en outre un débitmètre (320) qui est en liaison fluidique avec l'amortisseur d'impulsions (5).
